# EUROPEAN PATENT SPECIFICATION

(11) **EP 2 952 627 B1**
(45) Date of publication and mention of the grant of the patent: **17.01.2018**
(21) Application number: 14754227.8
(22) Date of filing: 03.02.2014
(51) Int. Cl.: D07B 1/06

(54) **STEEL CORD AND ELASTIC TRACK USING SAME**
STAHLSEIL UND FLEXIBLE SPUR DAMIT
CORDON EN ACIER ET PISTE ÉLASTIQUE L'UTILISANT

(30) Priority: 21.02.2013 JP 2013032366
(43) Date of publication of application: 09.12.2015
(73) Proprietor: Sumitomo Rubber Industries, Ltd., Kobe-shi, Hyogo 651-0072 (JP); Tokusen Kogyo Co., Ltd, Ono-City, Hyogo 675-1361 (JP)
(72) Inventor: NISHIMURA Akihiro, Kobe-shi Hyogo 651-0072 (JP); YOSHIDA Satoshi, Ono-shi Hyogo 675-1361 (JP)
(74) Representative: Manitz Finsterwald Patentanwälte PartmbB
(86) International application number: PCT/JP2014/052442
(87) International publication number: WO 2014/129300

(56) References cited:
- WO-A1-2015/090921
- JP-A- 2000 017 587
- JP-A- 2009 052 177
- JP-A- 2009 242 983
- US-A1- 2013 032 264
- US-B1- 6 863 103
- WOLF G H ET AL: "DER EINFLUSS DER CORDKONSTRUKTION AUF DIE HAFTUNG GUMMI/STAHL", KAUTSCHUK UND GUMMI - KUNSTSTOFFE, HUTHIG VERLAG, HEIDELBERG, DE, vol. 34, no. 5, 1 May 1981 (1981-05-01), pages 365-370, XP001066486, ISSN: 0948-3276
- ANONYMOUS: "Micro-alloyed steel cord constructions for tyres", RESEARCH DISCLOSURE, MASON PUBLICATIONS, HAMPSHIRE, GB, vol. 349, no. 84, 1 May 1993 (1993-05-01), XP007119044, ISSN: 0374-4353

## Description

### Technical field

The present invention relates to a steel cord, which is suitable for a tensile strength cord of the elastic crawler and is capable of preventi ng wire center-core dislocation in a core and early breakage of the wire in the core, and an elastic crawler using the same. The features of the preamble of the independent claim are known from JP 2009-52177 A. Related technologies are known from US 2013/032264 A1, JP 2009-242983 A, and JP 2000-017587 A.

### Background of the Art

A crawler type traveling device adopted in the traveling section of an agricultural machine, a constructing machine and the like comprises an endless band-formed elastic crawler wound revolvably by a driving wheel (sprocket), an idler, tracker roller and the like. The elastic crawler comprises an endless band-formed crawler main body made of rubber elastic material and a tensile member for reinforcement embedded in it. The tensile member comprises a plurality of tensile strength cords extending continuously in a crawler circumferential direction. In particular, an elongated band body i s once wound i n the crawl er circumferential di recti on and its circumferential both ends are superimposed and connected so as to form the endless band-formed tensile member. And the band body is formed by coating an array body of the tensile strength cord arranged in the longitudinal direction with topping rubber.

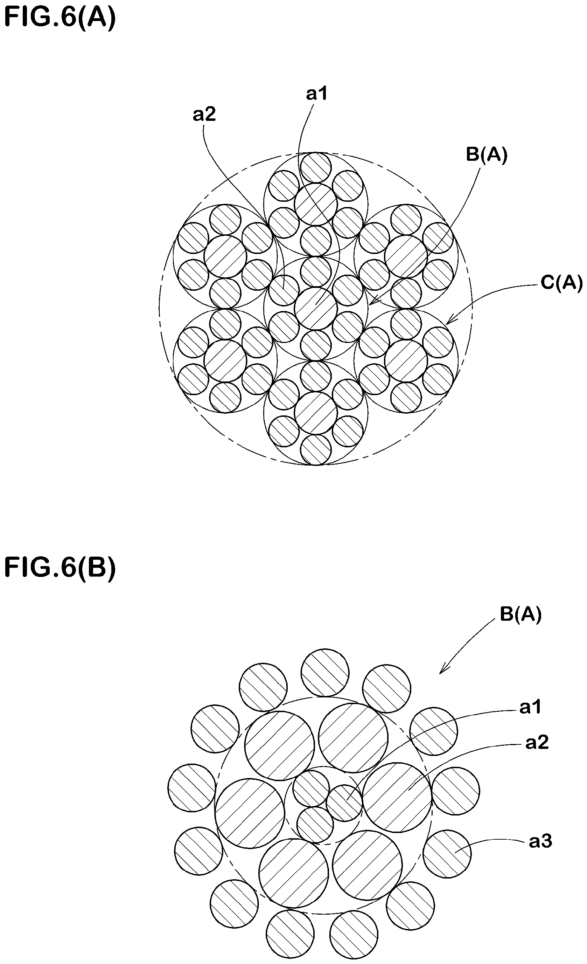

On the other hand, as shown in Fig. 6 (A), a steel cord having a structure of 7×(1+6), which comprises seven strands A each having the same 1+6 structure, is proposed as the tensile strength cord (Patent Document 1, for example) . That is to say, the tensile strength cord comprises a core B made of a single strand A and a sheath c formed by twisting six strands A disposed around the core B.

However, when the steel cord has the above-mentioned structure, in the strand A forming the core B, a wire (a1) forming a center-core portion of the core is single and is not twisted with other wire (a2) disposed around it. There is therefore a problem that load and flexion exerting repeatedly while the vehicle is moving make the wire (a1) forming the center-core portion of the core to protrude from a cord end in the axial di recti on by little and little and eventually to break through a crawler rubber main body so as to protrude from the outer periphery of a elastic crawler.

Moreover, when the cord formed by twisting a plurality of strands A, the wire of the strand A forming the core B tends to break earlier. causatively, when tensile force exerts on the cord, there is a possibility that the strand A, which forms a sheath C, constricts the strand A, which forms the core B. According to this, not only tension load but also tightening load are exerted on the wi re of the core B and contacts pressure between the wires is increased. And it is estimated that these causes early breakage. Specifically, as shown in Fig. 6A, when the wi res forming the core B have different thicknesses (diameters), it causes a problem that the early breakage arises more significantly in a thinner wire and deteriorates cord strength.

Also, as shown in Fig. 6 (B), the applicant of the present invention proposes to employ the 3+6+12 layer-twisted structure for the strand A of the core B. this structure comprises, a central portion formed by twisting three wires (a1), a first external layer portion formed by twisting six wires (a2) disposed around the central portion, and a second external layer portion formed by twisting twelve wires (a3) disposed around the fi rst external layer (see Patent Document 2). In this structure, since the central portion of the core B is formed by twisting the three wires (a1), it produces an effect on center-core dislocation of the core B. There are however large differences between the thicknesses (diameters) of the wires (a1), (a2), (a3) of the core B; therefore, it produces no effect on the early breakage of the wire in the core B.

### RELATED ART DOCUMENTS

### Patent Documents

Patent Document 1: Japanese Patent Publication No. 2001-20188
Patent Document 2: Japanese Patent No. 4021224

### SUMMARY OF THE INVENTION

### Problems that the invention is to Solve

The present invention aims to provide a steel cord, which enable to be used as a tensile strength cord of the elastic crawler and to reduce center-core dislocation of a wire and early breakage of the wire in a core, and an elastic crawler using the same.

### Means of solving the Problems

To solve the above problem, the i nventi on provi des a steel cord accordi ng to claim 1, the steel cord compri si ng a core formed of a single core strand, and a sheath formed by twisting together six sheath strands arranged around the core. The core strand has a layer-twisted structure comprising a center-core portion formed by twisting together three core wires and an external layer portion formed by twisting together eight to nine core wires arranged around the center-core portion. The sheath strand each has a bundle-twisted structure formed by bundling and twisting twelve to nineteen sheath wires. A diameter (dc) of each of the core wires is greater than a diameter (ds) of each of the sheath wi res. And an average gap (Gc) between the core wi res of the external layer portion is not less than 0.015 mm, and an average gap (Gs) between the sheath strands is not less than 0.1 mm.

In claim 2, a real cord cross-sectional area S1, which is a sum total of a sum of wire cross-sectional area of the core wire and a sum of a wire cross-sectional area of the sheath wire, is more than 48% and less than 51% of a apparent cord cross-sectional area so, which is an area of the smallest di ameter ci rcumscri bed circle among ci rcumscri bed circles surrounding the steel cord.

In claim 3, a diameter Dc of the core strand is equal to or more than 40% of a diameter DO of the steel cord.

In claim 4, a ratio (dc/ds) between the diameter (dc) of the core wire (25) and the diameter (ds) of the sheath wi re (26) is not less than 1.5. In claim 5, an elastic crawler including an endless band-formed crawler main body made of rubber elastic material, and a tensile member embedded in the crawler main body. The tensile member comprises a plurality of tensile strength cords continuously extending in the crawler circumferential direction. And for the tensile strength cord, the steel cord as set forth in any one of claims 1 to 4 is employed.

### EFFECT OF THE INVENTION

In the steel cord according to the present invention, a core strand forming a core has a 3+N layer-twisted structure (N= 8 to 9) comprising a center-core portion formed by twisting three core wires, and an external layer porti on formed by twisting eight to nine core wires. A sheath strand forming a sheath has a 1×M bundle-twisted structure (M= 12 to 19) formed by twisting 12 to 19 sheath wires in a bundle.

In this manner, in the core, its center-core portion is formed of a twisted body of three core wires, thereby inhibiting the center-core dislocation of the core.

In the present invention, the core strand is formed of the core wires each having the same wire diameter. The sheath strand can be formed of the sheath wires each having the same wire diameter and also be formed of the sheath wires having different wire diameters. In addition, the diameter (dc) of the core wire is set to be larger than the diameter (ds) of the sheath wire, thereby inhibiting the early breakage of the wire in the core strand.

The reason for above is as follows: when tensile force is exerted on the cord, the core strand is constricted by the sheath strands; therefore, tightening load unnecessarily acts on the wire of the core strand as compared to the wire of the sheath strand, also contact pressure between the wires increases. However, in the present invention, the core wire is set to be thicker than the sheath wire thereby the strength of the core being relatively high compared with that of the sheath wire. Moreover, the core strand is formed of the same core wires. That is to say, since the strength of each wire forming the core strand is even, a weak point of the strength can be cleared out. As a result, it is possible to effectively suppress the early breakage.

And in the present invention, an average gap Gc between the core wires in the external layer portion is set to not less than 0.015 mm, and the average gap Gs between the sheath strands is set to not less than 0.1 mm. Accordingly, those would be enough to ensure rubber permeability around the core strand and into the core strand. In consequence, owing to the adhesion with penetrating rubber, the center-core dislocation of the center-core portion can be inhibited more. And, the penetrating rubber lightens up the tightening load to the core wi re and the contact pressure between the core wires; thereby the early breakage in the core wire can be inhibited all the more.

In addition, the sheath strand is set to have a 1×M bundle-twisted structure, its cross-section is compact, and the average gap Gs would be enough to be ensured while having the same steel quantity. Also, since the contact area between the sheath wi res is large owing to the employment of the bundle-twisted structure, it helps to inhibit fretting wear.

### BRIEF DESCRIPTION OF THE DRAWINGS

[Fig. 1] is a side view showing a part of a vehicle mounted with the elastic crawler according to the present invention.
[Figs. 2] (A) is a perspective view conceptually showing a driving wheel; and (B) is a partial cross-sectional view showing the elastic crawler with a driving wheel.
[Fig. 3] is a partial cross-sectional view showing the elastic crawler with the tracker roller.
[Figs. 4] (A) is a cross-sectional view of a tensile strength cord; and (B) is a cross-sectional view of a core strand.
[Fig. 5] is a cross-sectional view of the tensile strength cord of the Comparative Example 1 in Table 1.
[Figs. 6] (A) and (B) are cross-sectional views of a conventional tensile strength cord.

### MODES FOR CARRYING OUT THE INVENTION

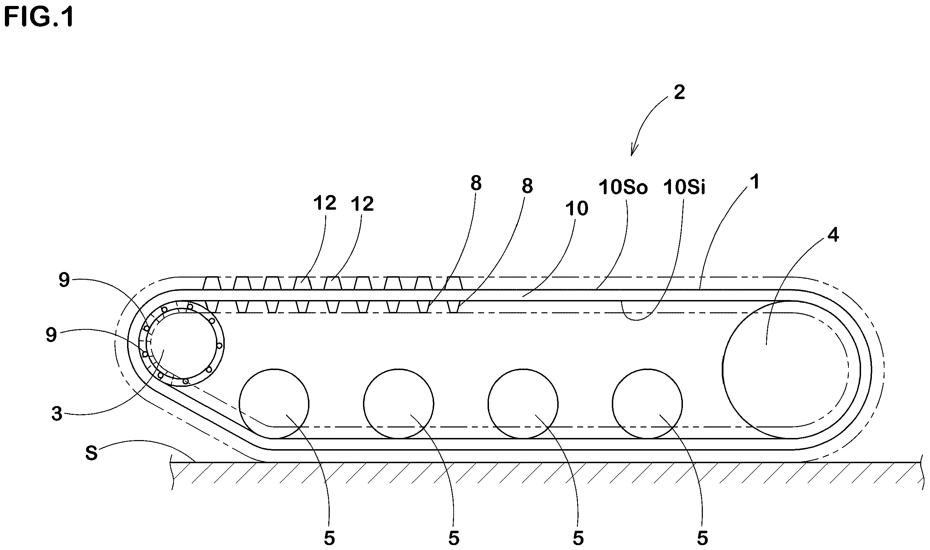

An embodiment of the present invention will be described in detail. Fig. 1 is a side view showi ng a part of a vehicle 2 fitted with an elastic crawler 1 according to the present invention. The vehicle 2 comprises a driving wheel 3, an idler 4, and a plurality of tracker rollers 5 on both sides of the vehicle body, respectively.

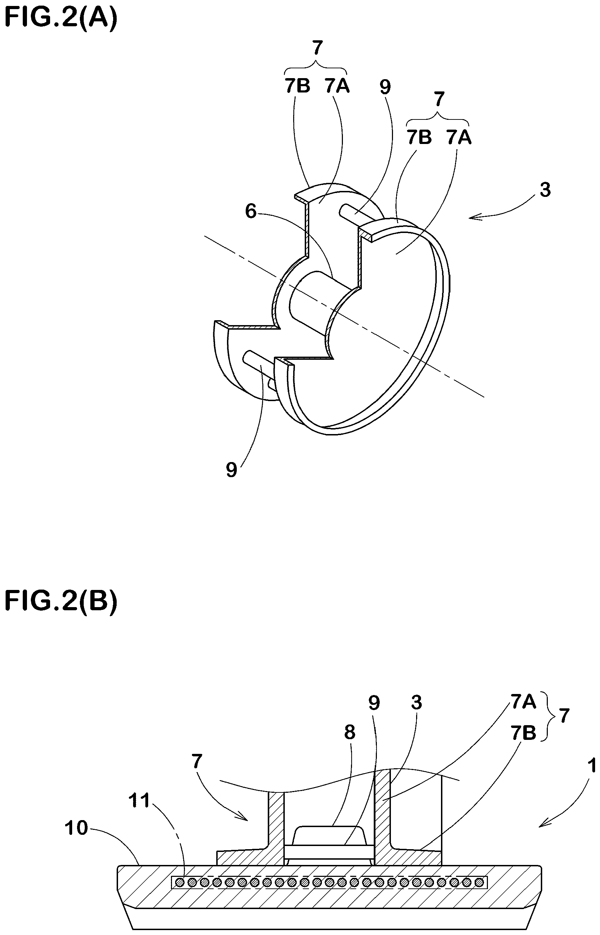

The driving wheel 3 is located on one side in the advancing direction of vehicle (front-side end, in the present embodiment). To improve running performance for climbing over protrusion from a road surface S, the driving wheel 3 is located apart above from the road surface S. The driving wheel 3 of the present embodiment comprises, as conceptually shown in Fig. 2, a pair of wheel portions 7 attached to the both ends of a central shaft 6. Each of the wheel portions 7 comprises discoidal side plates 7A concentrically fixed to the central shaft 6, and a cylindrical flange portion 7B bent outwardly in the axial di recti on from the outer perimeter edge of the side plates 7A. A plurality of engaging pins 9 are disposed between the side plates 7A, 7A at regular intervals in the circumferential direction. The engaging pins 9 interlock with projection portions 8 disposed on the elastic crawler 1 to transmit the power to the elastic crawler 1

The idler 4 is provided on the other end in the advancing direction of vehicle (rear-side end, in the present embodiment), and rotates dependently on the circularly movement of the elastic crawler 1.

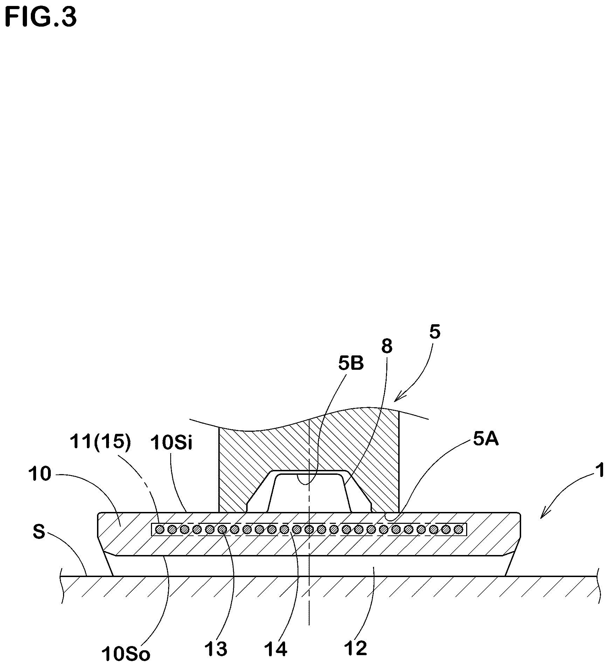

The tracker roller 5 guides the elastic crawler 1 so as to go around between the driving wheel 3 and the idler 4 while pressing the elastic crawler 1 on the road surface S. Therefore, the vehicle 2 can run. This tracker roller 5 comprises, in the present embodiment, as shown in Fig. 3, a large-diameter pressing surface portion 5A positioned on the both end sides in the axial direction and pressing the elastic crawler 1 on the road surface S, and a small-diameter concave portion 5B positioned on a middle side in the axial direction to avoid impingement with the projection portion 8 of the elastic crawler 1 while running.

Next, the elastic crawler 1 includes, as shown in Figs. 1 and 3, an endless band-formed crawler main body 10 made of rubber elastic material, and a tensile member 11 embedded in the crawler main body 10.

The crawler main body 10 is provided on an inner periphery 10Si with a plurality of projection portions 8. The projection portions 8 interlock with the engaging pins 9 located in the driving wheel 3 and transmit the power from the driving wheel 3. The projection portions 8 and the engaging pins 9 are therefore arranged in the crawler circumferential direction at regular pitches. In the present embodiment, each of the projection portions 8 has a square-pyramid-trapezoidal shape, but is not limited to. For example, the driving wheel 3 can be liberally provided with groove portions such as in a sprocket or in a gear and the projection portions 8 of the crawler main body 10 is formed as tooth so as to interlocking with the groove portion.

Each of the projection portions 8 is formed of the same rubber as the crawler main body 10 in the present embodiment. But it can be formed of high elastic rubber having larger elastic modulus than the crawler main body 10, for example. Another example, short fiber compounded rubber containing short fibers in the rubber can be employed for the projection portion 8 to reinforce. Note that the sign 12 in Drawings indicates a lag rib protruding from the outer periphery 10So of the crawler main body 10 and extending in the crawler width direction to improve the grip performance with the road surface S.

Next, the tensile member 11 includes a plurality of tensile strength cords 13 extending in the crawler circumferential direction. The tensile member 11 of the present embodiment is formed by using an elongated band body 15. The elongated band body 15 comprises a cord array body where the tensile strength cords 13 extending continuously in the crawler circumferential direction is arranged parallel in the crawler width direction, and a topping rubber 14 coating this cord array body. Specifically, the band body 15 is wound once in the crawler circumferential direction, and the circumferential ends are connected by overlapping one another so as to form the tensile member 11 in endless band-formed.

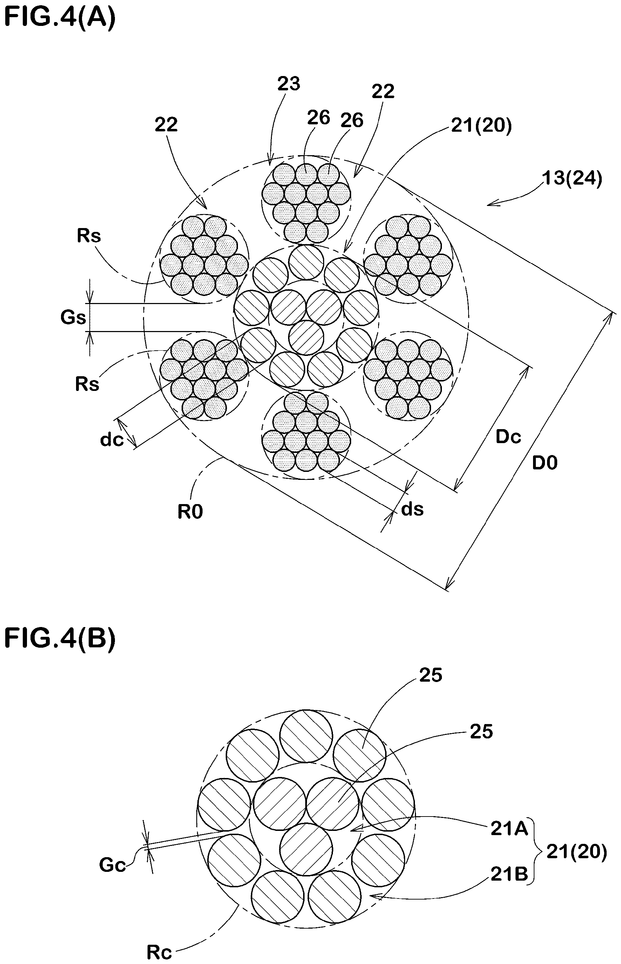

Also, for the tensile strength cord 13, as shown in Fig. 4 (A), employed is a steel cord 24. The steel cord 24 comprises a core 21 made of a single core strand 20 and a sheath 23 formed by twisting together six sheath strands 22 disposed around this core 21.

The core strand 20 has, as shown in Fig. 4 (B), a 3+N layer-twisted structure (N= 8 to 9) comprising center-core portion 21A formed by twisting three core wires 25, and an external layer portion 21B formed by twisting eight to nine core wires 25 disposed around the center-core portion 21A. In Figs. 4 (A) and (B), expedientially the core wire 25 forming the center-core portion 21A is different from the core wire 25 of the external layer portion 21B in the cross-sectional designs, but they are formed of substantially the same wires.

In the core strand 20, at least one of the twi sti ng di recti on and twisting pitch of the center-core portion 21A is different from the twisting direction and twisting pitch of the external layer portion 21B. In this case, it is preferable in increasing the contact area between the core wi res 25 so as to reduce the fretting wear between the core wires 25 that the center-core portion 21A and the external layer portion 21B have the same twisting direction. However, it may possible to differ both of the twisting direction and twisting pitch.

Each of the sheath strands 22 has a 1×M bundle-twisted structure (M= 12 to 19) formed by twi sti ng twelve to nineteen sheath wi res 26 in a bundle.

The diameter (dc) of the core wire 25 is larger than the diameter (ds) of the sheath wire. In this manner, the center-core portion 21A of the core 21 are formed of a twisted body of three core wire 25, thereby increasing the binding force between core wires 25 and improving the binding force from the external layer portion 21B of the center-core portion 21A. Therefore, the dislocation of the center-core portion 21A itself and the dislocation of the core wire 25 in the center-core portion 21A can be inhibited.

Also, the core strand 20 is formed of the core wires 25 each having the same wire diameter. The sheath strand 22 is formed of the sheath wires 26 each having the same wire diameter. The diameter (dc) of the core wire 25 is set to be larger than the diameter (ds) of the sheath wire 26, thereby inhibiting the early breakage of the core wire 25 in the core strand 20.

That is to say, the core wire 25 is thicker than the sheath wire 26 so as to relatively improve the strength of the core wire 25 compared to the strength of the sheath wire 26. Moreover, since the core strand 20 is formed of the same core wire 25, the weak point in the strength of the wire can be cleared out. In consequence, the early breakage can be effectively inhibited. A ratio (dc/ds) between the diameters (dc), (ds) is preferably not less than 1.5. when it is below 1.5, the inhibitive effect of the early breakage is disadvantaged.

Moreover, in the steel cord 24, the average gap Gc between the core wires 25 in the external layer portion 21B is set to not less than 0.015 mm, and the average gap Gs between the sheath strands 22 is set to not less than 0.1 mm. Therefore, the rubber permeability around the core strand 20 and into the core strand 20 can be sufficiently secured. And as a result, an adhesion between the entering rubber and the center-core portion 21A can inhibit more the center-core dislocation of the center-core portion 21A. Also the entering rubber lightens up the tightening load to the core wires 25 and the contact pressure between the core wires 25, thereby inhibiting more the early breakage of the core wires 25.

Meanwhile, the sheath strand 22 has the bundle-twisted structure, a cross-section is compactable and can sufficiently secure the average gap Gs while keeping the same quantity of steel. Furthermore, owing to the bundle-twisted structure, the contact area of the sheath wires 26 is large, thereby having an advantage in the fretting wear. Meanwhile, the average gap Gc means a value obtained by dividing the sum ΣGc of the gaps Gc between the core wires 25 in the external layer portion 21B by the number of the gaps. Also, the average gap Gs means a value obtained by dividing the sum ΣGs of the gaps Gs between the sheath strands 22 by the number of the gaps. Furthermore, the gap Gs between the sheath strands 22 means a gap between the circumscribed circles Rs which is defined as the smallest-diameter circumscribed circle among circumscribed circles around the sheath strand 22.

The upper limit of the average gap Gc is limited by the average gap Gc in the case that the core strand 20 has a 3+8 layer-twisted structure. The upper limit of the average gap Gs is limited by the average gap Gs in the case that the sheath strand 22 has a 1×12 bundle-twi sted structure.

Next, in the steel cord 24, a real cord cross-sectional area S1 is preferably larger than 48% and smaller than 51% of an apparent cord cross-sectional area SO. The real cord cross-sectional area S1 is indicated by a sum total (ΣSc + ΣSs) of the sum ΣSc of a wire cross-sectional area Sc of each of the core wires 25 and the sum ΣSs of a wire cross-sectional area Ss of each of the sheath wi res 26. The apparent cord cross-sectional area SO is indicated by an area of the smallest-diameter circumscribed circle RO among the circumscribed circles around the steel cord 24.

Since the real cord cross-sectional area S1 is smaller than 51% of the apparent cord cross-sectional area so, a ratio of filled rubber in the cord increases. Accordingly, the filled rubber can reduce the tightening load to the core wi res 25 and the contact pressure between the core wi res 25, thereby having advantages in an inhibition of the early breakage and in an inhibition of the center-core dislocation of the core 21. Meanwhile, when the real cord cross-secti onal area S1 is less than 48% of the apparent cord cross-sectional area so, the steel rate decreases, thereby causing the decrease of the cord strength itself.

The diameter Dc of the core strand 20 is preferably equal to or larger than 40% of the diameter DO of the steel cord 24. The diameter Dc of the core strand 20 is indicated by the smallest-diameter among the diameters circumscribed circles around the core strand 20. The diameter DO of the steel cord 24 is a diameter of the circumscribed circle RO.

when the ratio of the diameter Dc of the core strand 20 of the diameter Dc to the diameter DO of the steel cord 24 is large, inescapably the rate of the diameter Ds of the sheath strand 22 is small. Therefore, the average gap Gs between the sheath strands 22 increases. Thus, the diameter Dc is set to equal to or larger than 40% of the diameter DO, thereby enabling to increase the average gap Gs and improving the rubber permeability inside the cord. In the result, it has advantages in the inhibition of the early breakage and center-core dislocation. Moreover, its upper limit is limited by the ratio Dc/DO where the sheath strand 22 has the 1×12 bundle-twisted structure.

Although especially preferred embodiment of the present invention has been described in detail, the invention is not limited to the illustrated embodiment, and various modifications can be made.

### EMBODIMENT

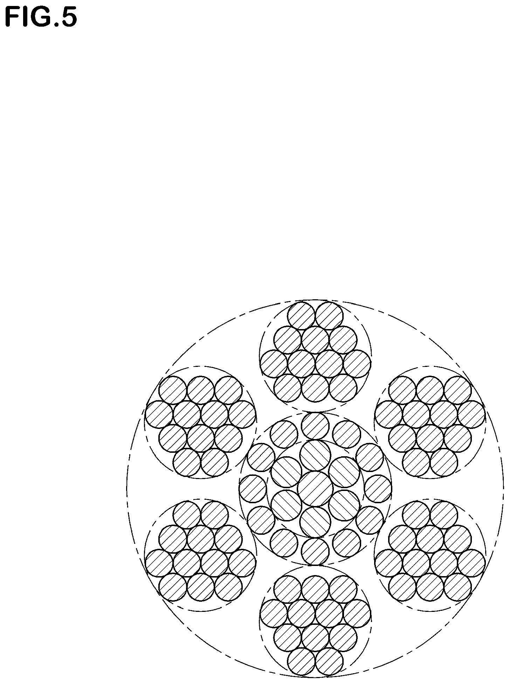

To confi rm the effect of the present invention, test steel cords having the specifications shown in Table 1 were made, and hygrothermal aging performance of each of the steel cords was tested. Test elastic crawlers shown in Figs. 2 and 3 where the test steel cords were employed as tensile strength cords of a tensile member, and durability and center-core dislocation performance of the tensile strength cord in each of the elastic crawlers were tested in an actual vehicle. The specification except the items shown in Table 1 was substantially the same. The tensile member was 3.8 mm in thickness, and the cord number of the tensile strength cord was 12 pieces/50 mm. A cross-sectional of the steel cord of the Comparative Example 1 is shown in Fig. 5.
(1) Hygrothermal aging performance:
   A sheet body obtained by sandwiching the steel cords between topping rubbers and having a thickness of 3.8 mm was vulcanized at 150 deg. C for 30 minutes. Then, the vulcanized sheet body was left for 150 hours under a hygrothermal aging condition (temperature of 80 deg. C, relative humidity of 98%), and taking the steel cords from the sheet body. In observing the steel cords within the length of 20 mm under a microscope, a search was done regarding presence or absence of occurrence of corrosion. The result was rated on a scale of zero to five, absence of the occurrence of corrosion was zero. The higher score means more corrosion and less rubber permeability.
(2) Center-core dislocation performance:
   The elastic crawler was mounted on a small shovel with a weight of 3500 kg and driven 400 km on a circuit course at a speed of 3.0 km/h. After driving, the elastic crawler was dismantled so as to visually confirm presence and absence of protruding (center-core dislocation) of a core wire from an end portion of the steel cord.
(3) Durability:
   The elastic crawler was mounted on the small shovel with a weight of 3500 kg and driven 500 km on the circuit course at a speed of 3.0 km/h. After driving, the elastic crawler was dismantled so as to confirm occurrence spot of subsidiary fracture of a wire in the steel cord. Evaluation is displayed using indices with the Comparative Example1 being 100. The larger the numeric value was, the less occurrence spot of subsidiary fracture was; and excellent at durability.

**[Table 1]**

| | Ex. 1 | Ex. 2 | Ex. 3 | Ex. 4 |
|---|---|---|---|---|
| Core strand | 3+9 | 3+8 | 3+8 | 3+9 |
| - Diameter (dc) of core wire [mm] | 0.23/0.23 | 0.28/0.28 | 0.23/0.23 | 0.33/0.33 |
| - Average gap Gc [mm] | 0.018 | 0.022 | 0.048 | 0.026 |
| Sheath strand | 1×12 | 1+6+12 | 1+6+11 | 3+9 |
| - Diameter (ds) of sheath wire [mm] | 0.175/0.175 | 0.22/0.19/0.175 | 0.15/0.15/0.15 | 0.28/0.28 |
| - Average gap Gs [mm] | 0.123 | 0.107 | 0.103 | 0.104 |
| Area ratio S1/S0 | 50.4 | 50.5 | 49.9 | 50.8 |
| Diameter ratio Dc/Do | 40.2 | 38.0 | 38.9 | 37.1 |
| Wire diameter ratio dc/ds | 1.31 | 1.60 | 1.53 | 1.18 |
| Center-core dislocation | Absent | Absent | Absent | Absent |
| Hygrothermal aging performance | 0 | 0S | 0 | 0.5 |
| Durability | 120 | 115 | 108 | 110 |

| | Com. Ex. 1 | Com. Ex. 2 | Com. Ex. 3 | Com. Ex. 4 | Com. Ex. 5 |
|---|---|---|---|---|---|
| Core strand | 1+6+12 | 1+6+12 | 3+8 | 3+9 | 3+8 |
| - Diameter (dc) of core wire [mm] | 0.22/0.19/0.175 | 0.255/0.23/0.22 | 0.19/0.19 | 0.22/0.22 | 0.35/0.35 |
| - Average gap Gc [mm] | 0.026 | 0.022 | 0.039 | 0.017 | 0.073 |
| Sheath strand | 1×12 | 1+6+12 | 1×19 | 1×19 | 1+6+12 |
| - Diameter (ds) of sheath wire [mm] | 0.175/0.175 | 0.22/0.19/0.175 | 0.15/0.15/0.15 | 0.18/0.18/0.18 | 0.28/0.28/0.28 |
| - Average gap Gs [mm] | 0.120 | 0.103 | 0.020 | 0.007 | 0.027 |
| Area ratio S1/S0 | 50.5 | 51.0 | 56.5 | 58.0 | 56.8 |
| Diameter ratio Dc/Do | 40.1 | 37.8 | 34.5 | 33.7 | 34.2 |
| Wire diameter ratio dc/ds | 1.00 | 1.31 | 1.27 | 1.22 | 1.25 |
| Center-core dislocation | Present | Present | Present | Absent | Absent |
| Hygrothermal aging performance | 3 | 5 | 0 | 3 | 1 |
| Durability | 100 | 85 | 75 | 90 | 70 |

As shown in Fig. 1, it was confirmed the cords of Examples were excellent at the center-core dislocation resistance and the subsidiary fracture inhibitive effect of the wire.

### EXPLANATIOM OF THE REFERENCE

- 1: Elastic crawler
- 10: Crawler main body
- 11: Tensile member
- 13: Tensile strength cord
- 20: Core strand
- 21: Core
- 21A: Center-core portion
- 21B: External layer portion
- 22: Sheath strand
- 23: Sheath
- 24: Steel cord
- 25: Core wire
- 26: Sheath wire

## Claims

1. A steel cord (24) having a 1+6 structure, comprising
a core (21) which consists of a single core strand (20), and
a sheath (23) which consists of six sheath strands (22) and formed by twisting together said six sheath strands (22) arranged around the core (21);
wherein the core strand (20) has a 3+N layer-twisted structure with N=8, 9, namely comprising a center-core portion (21A) formed by twisting together three core wires (25), and an external layer portion (21B) formed by twisting together N core wires (25) arranged around the center-core portion (21A), the core wires (25) each having the same diameter (dc);
the sheath strand (22) each is formed by sheath wires (26), the sheath wires (26) each having the same diameter (ds),
a diameter (dc) of each of the core wires (25) is greater than a diameter (ds) of each of the sheath wires (26);
**characterized in that**
the sheath strand (22) each has a 1×M bundle-twisted structure with M=12 to 19 formed by twisting M sheath wires (26) in a bundle; and
an average gap (Gc) between the core wires (25) of the external layer portion (21B) is not less than 0.015 mm, and an average gap (Gs) between the sheath strands (22) is not less than 0.1 mm.

2. The steel cord as set form in claim 1, wherein
a real cord cross-sectional area S1, which is a sum total of a sum of a wire cross-sectional area of the core wire (25) and a sum of a wire cross-sectional area of the sheath wire (26), is more than 48% and less than 51% of a apparent cord cross-sectional area so, which is an area of the smallest diameter circumscribed circle (Ro) among circumscribed circles surrounding the steel cord (24).

3. The steel cord as set form in claim 1 or 2, wherein
a diameter (Dc) of the core strand (20) is equal to or more than 40% of a diameter (DO) of the steel cord (24).

4. The steel cord as set form in claim 1 or 2, wherein
a ratio (dc/ds) between the diameter (dc) of the core wire (25) and the diameter (ds) of the sheath wire (26) is not less than 1.5.

5. An elastic crawler (1) including
an endless band-formed crawler main body (10) made of rubber elastic material, and
a tensile member (11) embedded in the crawler main body (10); wherein
the tensile member (11) comprises a plurality of tensile strength cords (13) continuously extending in a the crawler circumferential direction, and for the tensile strength cord (13), the steel cord (24) as set forth in any one of claims 1 to 4 is employed.

## Patentansprüche

1. Stahlkord (24) mit einer 1+6-Struktur, umfassend
einen Kern (21), der aus einem einzigen Kernstrang (20) besteht, und
einen Mantel (23), der aus sechs Mantelsträngen (22) besteht und durch Verdrehen der sechs um den Kern (21) herum angeordneten Mantelstränge (22) miteinander gebildet ist;
wobei der Kernstrang (20) eine als 3+N Schicht gedrehte Struktur N=8, 9 aufweist, die nämlich einen zentralen Kernabschnitt (21A), der durch Verdrehen von drei Kerndrähten (25) miteinander gebildet ist, und einen Außenschichtabschnitt (21B) umfasst, der durch Verdrehen von N um den zentralen Kernabschnitt (21A) herum angeordneten Kerndrähten (25) miteinander gebildet ist, wobei die Kerndrähte (25) jeweils den gleichen Durchmesser (dc) aufweisen;
der Mantelstrang (22) jeweils durch Manteldrähte (26) gebildet ist, wobei die Manteldrähte (26) jeweils den gleichen Durchmesser (ds) aufweisen,
ein Durchmesser (dc) eines jeden der Kerndrähte (25) größer ist als ein Durchmesser (ds) eines jeden der Manteldrähte (26);
**dadurch gekennzeichnet, dass**
der Mantelstrang (22) jeweils eine als 1xM Bündel gedrehte Struktur mit M=12 bis 19 aufweist, die durch Verdrehen von M Manteldrähten (26) zu einem Bündel gebildet ist; und
ein durchschnittlicher Spalt (Gc) zwischen den Kerndrähten (25) des Außenschichtabschnitts (21B) nicht kleiner als 0,015 mm ist, und ein durchschnittlicher Spalt (Gs) zwischen den Mantelsträngen (22) nicht kleiner als 0,1 mm ist.

2. Stahlkord nach Anspruch 1, wobei eine reale Kordquerschnittsfläche S1, die eine Gesamtsumme aus einer Summe einer Drahtquerschnittsfläche des Kerndrahtes (25) und einer Summe der Drahtquerschnittsfläche des Manteldrahtes (26) ist, größer als 48% und kleiner als 51% einer scheinbaren Kernquerschnittsfläche SO ist, die eine Fläche des mit dem kleinsten Durchmesser umschriebenen Kreises (Ro) unter den Stahlkord (24) umgebenden umschriebenen Kreisen.

3. Stahlkord nach Anspruch 1 oder 2, wobei ein Durchmesser (Dc) des Kernstrangs (20) gleich oder größer als 40% eines Durchmessers (DO) des Stahlkords (24) ist.

4. Stahlkord nach Anspruch 1 oder 2, wobei ein Verhältnis (dc/ds) zwischen dem Durchmesser (dc) des Kerndrahtes (25) und dem Durchmesser (ds) des Manteldrahtes (26) nicht kleiner als 1,5 ist.

5. Elastische Raupe (1), umfassend
einen ein endloses Band bildenden Raupenhauptkörper (10), der aus elastischem Kautschukmaterial hergestellt ist, und
ein Zugelement (11), das in den Raupenhauptkörper (10) eingebettet ist;
wobei das Zugelement (11) eine Mehrzahl von Zugfestigkeitskorden (13) umfasst, die sich durchgehend in der Raupenumfangsrichtung erstrecken, und für den Zugfestigkeitskord (13) der Stahlkord (24) nach einem der Ansprüche 1 bis 4 angewandt wird.

## Revendications

1. Cordon en acier (24) ayant une structure du type "1+6", comprenant une âme (21) qui est constituée d'un unique brin d'âme (20), et
une gaine (23) qui est constituée de six brins de gaine (22) et qui est formée en torsadant ensemble lesdits six brins de gaine (22) agencés autour de l'âme (21) ;
dans lequel le brin d'âme (20) a une structure en couche torsadée du type "3+N" avec N=8, 9, comprenant en fait une portion d'âme centrale (21A) formées en torsadant ensemble trois fils d'âme (25), et une portion de couche externe (21B) formée en torsadant ensemble N fils d'âme (25) agencés autour de la portion d'âme centrale (21A), les fils d'âme (25) ayant chacun le même diamètre (dc) ;
chacun des brins de gaine (22) est formé de fils de gaine (26), les fils de gaine (26) ayant chacun le même diamètre (ds),
un diamètre (dc) de chacun des fils d'âme (25) est plus grand qu'un diamètre (ds) de chacun des fils de gaine (26) ;
**caractérisé en ce que**
chacun des brins de gaine (22) a une structure torsadée en faisceau du type "1xM" avec M = 12 à 19, formé en torsadant M fils de gaine (26) dans un faisceau ; et
un intervalle moyen (Gc) entre les fils d'âme (25) de la portion de couche externe (21B) n'est pas inférieur à 0,015 mm, et un intervalle moyen (Gs) entre les brins de gaine (22) n'est pas inférieur à 0,1 mm.

2. Cordon en acier selon la revendication 1, dans lequel une superficie de section transversale réelle du cordon S1, qui est une somme totale des aires de section transversale des fils d'âme (25) et des aires de section transversale des fils de gaine (26), et supérieure à 48 % et inférieure à 51 % d'une aire de section transversale apparente du cordon, qui est une aire du cercle circonscrit (Ro) ayant le plus petit diamètre parmi les cercles circonscrits qui entourent le cordon en acier (24).

3. Cordon en acier selon la revendication 1 ou 2, dans lequel un diamètre (DC) du brin d'âme (20) est égal ou supérieur à 40 % d'un diamètre (DO) du cordon en acier (24).

4. Cordon en acier selon la revendication 1 ou 2, dans lequel un rapport (dc/ds) entre le diamètre (dc) du fil d'âme (25) et le diamètre (ds) du fil de gaine (26) n'est pas inférieur à 1,5.

5. Chenille élastique (1) incluant
un corps principal de chenille en forme de bande sans fin (10) réalisée en matériau élastique à base de caoutchouc, et
un élément de traction (11) noyé dans le corps principal de chenille (10) ; dans lequel
l'élément de traction (11) comprend une pluralité de cordons (13) résistant à la traction, s'étendant en continu dans la direction circonférentielle de la chenille et, pour le cordon (13) résistant à la traction, le cordon en acier (24) selon l'une quelconque des revendications 1 à 4 est employé.
